# EUROPEAN PATENT APPLICATION

(11) **EP 1 133 118 A2**
(43) Date of publication of application: **12.09.2001**
(21) Application number: 01440037.8
(22) Date of filing: 19.02.2001
(51) Int. Cl.: H04L 12/56

(54) **IP/Data traffic allocating method to maintain QoS**

(30) Priority: 10.03.2000 AU 2079500
(71) Applicant: ALCATEL, 75008 Paris (FR)
(72) Inventor: Cox, Michael Stefan, Jannali, New South Wales 2226 (AU); Vucic, Mickey, Killara, New South Wales 2071 (AU); Banh, Bui Anh Jonathan, Burwood, New South Wales 2134 (AU)
(74) Representative: Schäfer, Wolfgang, Dipl.-Ing.

(57) **Abstract**

This invention provides a means of improving quality of service, and is of particular use in a network using multi-path. The sending node determines the available paths to the receiving node from a network map 45, and the available capacity of the paths from a traffic status report 46, and selects the path for a datagram 41 on the basis of the QoS 44. Datagrams 41 with the requirement for a Type of Service 43 having high priority (eg. Low latency) are allocated to the shortest path(s) with the available capacity and lower priority datagrams are progressively allocated to longer paths.

## Description

### Technical Field

This invention relates to a method and arrangement for improving the quality of service (QoS) of transmissions in a Data Network. An application of such an invention is in the transmission of information over a network using the Internet Protocol (IP).

IP/Data networking is a developing market, and carriers need to be able to provide QoS guarantees for different grades of traffic. At present IP traffic is subject to variable QoS depending on network usage.

### Background Art

This invention extends the work of the IETF (Internet Engineering Task Force) in the areas of Differentiated Services (DiffServ) and Integrated Services (IntServ) and all associated patents either granted or pending. This invention aims to address some of the failings inherent within these two bodies of work. In particular the scalability and performance limitations of the IntServ model as well as the lack of native direct support for QoS performance guarantees within the DiffServ model.

### Disclosure of the Invention

This specification therefore discloses a method of allocating traffic to a path or paths between a sending node and a receiving node in a network, wherein each message includes a QoS flag,
the method including:
- at the sending node, compiling a traffic status map of the available capacity on the or each practical path between the sending node and the receiving node;
- allocating messages to paths on the basis of its QoS flag, and the available capacity of the paths.

### Brief Description of the Drawings

Figure 1 shows an example of version 4 of the IP header.

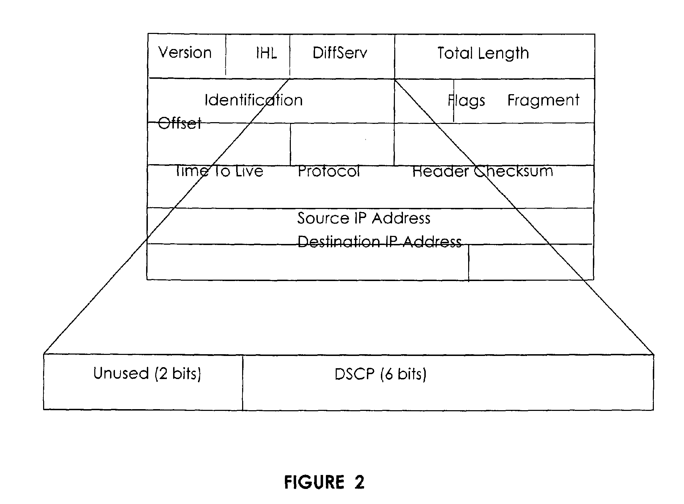

Figure 2 illustrates the "Differentiated Services" ("DS") field of figure 1.
Figure 3 illustrates exemplary probability charts for the transmission of different grades of traffic.
Figure 4 illustrates the functional processes in determining the path of a datagram.

### Best Mode of Carrying Out the Invention

Our Australian Patent Application No. 44470/99 discloses a technique in which all viable potential paths between source and destination can be used to improve network utilization and decrease overall latency. This technique is extended for all classes of traffic, particularly those which require the higher levels of QoS, because in the "all-practical-paths maximal flow" technique, individual packets will experience varying delays depending on the number of nodes they transit and the current delays in those nodes.

The "all-practical-paths maximal flow" technique utilizes a network status mapping method under which the nodes are aware of the traffic conditions across the network. Application Number 44470/99 describes an iterative hierarchal structure of interconnected nodes in which the available capacity of each node is reported to the nodes higher in the hierarchy, and which determines an overall availability for the group of nodes reporting to it. This iterative structure means that the overall amount of information exchanged for remote nodes is condensed, while more detailed information is exchanged about proximate nodes. In this manner, a node can determine the available capacity between itself and a destination node over various paths.

However, the "all-practical-paths maximal flow" technique does not, of itself, guarantee QoS. For example, segments of a message requiring low latency may be sent over paths of differing lengths and experience differing delays.

It is therefore desirable to implement a mechanism which improves the QoS. The Internet Protocol makes provision for a grade of service field to indicate the required grade of service of a datagram.

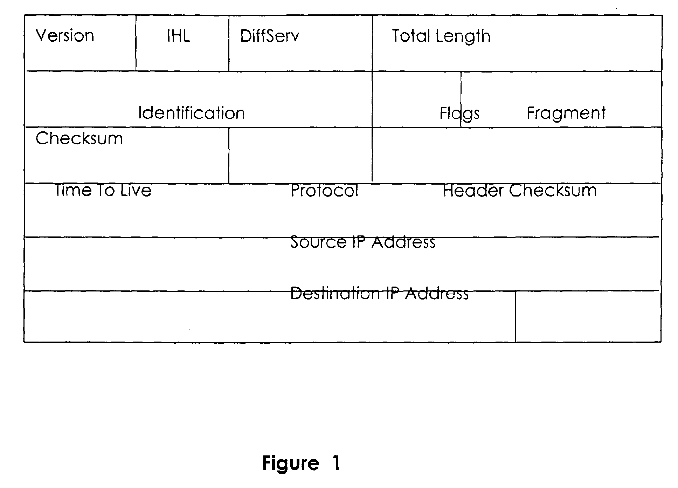

The Internet Protocol (IP) header format is shown in Figure 1 and includes the following fields:
1. Version;
2. IHL (Internet Header Length)
3. Differentiated Services (DS)
4. Total Length
5. Identification;
6. Flags;
7. Fragment Offset;
8. Time to Live;
9. Protocol;
10. Header checksum;
11. Source IP Address;
12. Destination IP address;
13. Options;
14. Padding

The DS field (Field 3) is 8 bits with the following functions:-
- 6-7 Unused (reserved for explicit congestion notification);
- 0-6 Differentiated Services Code Point (DSCP)

The following DSCP classes have been standardised :-
- Expedited Forwarding (EF)
- Assured Forwarding (AF1-4)
- Best Effort (BE)
- Class Selector (CS)

Thus the DSCP specifies the required grade of service.

An example of the operation of the invention will be described in the context of an IP/Data Network.

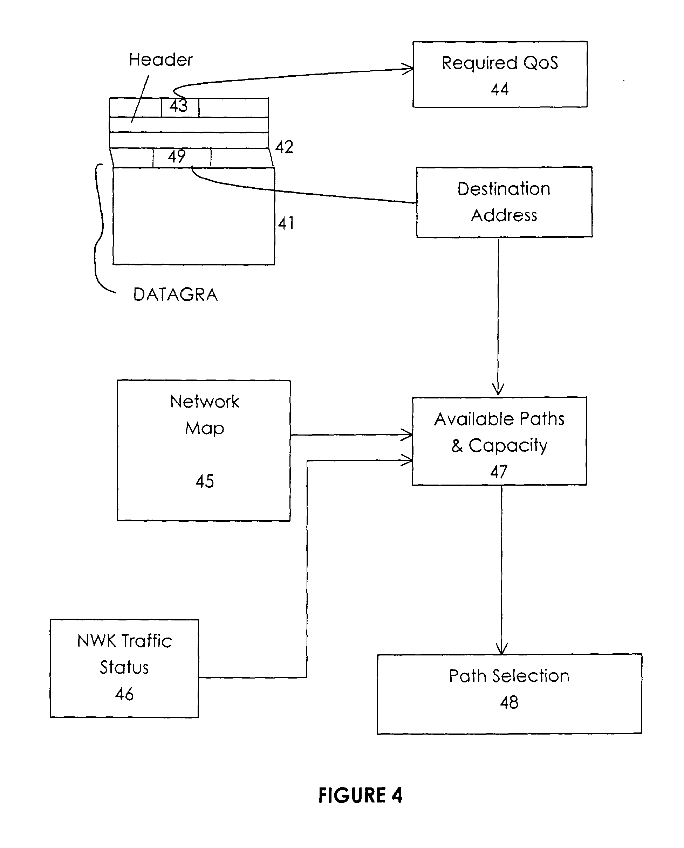

In figure 4, at a source node, a datagram 41 includes a header 42. The header includes a DS field 43 from which a required QoS can be determined by analysing the DSCP information. Each node has access to network architecture information 45 which is combined in path identification process 47 with network traffic status information 46 and the destination address in process 50, to determine the available paths from the source to the destination, and the available capacity for each of those paths.

The required QoS information 44 is then combined with the path/capacity information in a path selection process 48 to determine over which path or paths the datagram is to be transmitted.

The DS field may be used directly to correspond to a QoS, or it may be translated, eg, via a look-up table to a hierarchical priority list implemented in the network which the traffic transits.

In a preferred embodiment, the path selection process implements the following:
From the DS field, a required QoS is selected at 44 from two or more available options. In this example the options are, in order of priority.
EF = Expedited Forwarding
characteristics:
Low Latency, Low Jitter, No discard
Applications:
Real time, interactive compressed multimedia;
Real time, industry control/monitoring systems;
SNA etc traffic.
EF - DE = Expedited Forwarding with discard Eligible
Characteristics:
Discard tolerant, low Latency, low jitter
Applications:
Real time, interactive games
AF1 = AF-ND = Assured Forwarding, No Discard (Vbr-nrt)
Characteristics:
No discard; latency & jitter tolerant
Applications:
Transaction networks, X. 25 applications
AF2 = AF = Assured forwarding (Vbr-nrt)
Characteristics:
Weighted variable discard; latency & jitters tolerant.
Platinum, gold, silver, Bronze priorities.
Applications:
Standard Services
BE = Best efforts
Characteristics:
No guarantees,
Applications:
Little or no carrier change.

In the path selection process 48, the QoS is implemented as follows:
EF QoS datagrams are allocated to the shortest path plus the next shortest path which have available capacity;
AF1 QoS datagrams are allocated to the same paths as the EF datagrams plus the next shortest paths, with EF taking precedence.
BE QoS datagrams have the same paths as AF1 plus the next shortest paths, with BE taking precedence

This pattern is repeated down the priority list.

Thus the highest priority datagrams have precedence over the shortest available paths, each lower priority in the hierarchy being progressively allocated to the longer path.

In periods of low use, low priority datagrams may use shorter paths, but, as use increases and higher priority traffic needs to be sent, low priority datagrams are pushed to longer paths.

This technique facilitates efficient use of the network by distributing traffic over the available paths, while ensuring the higher priority datagrams have low latency by transmitting them on the shortest paths.

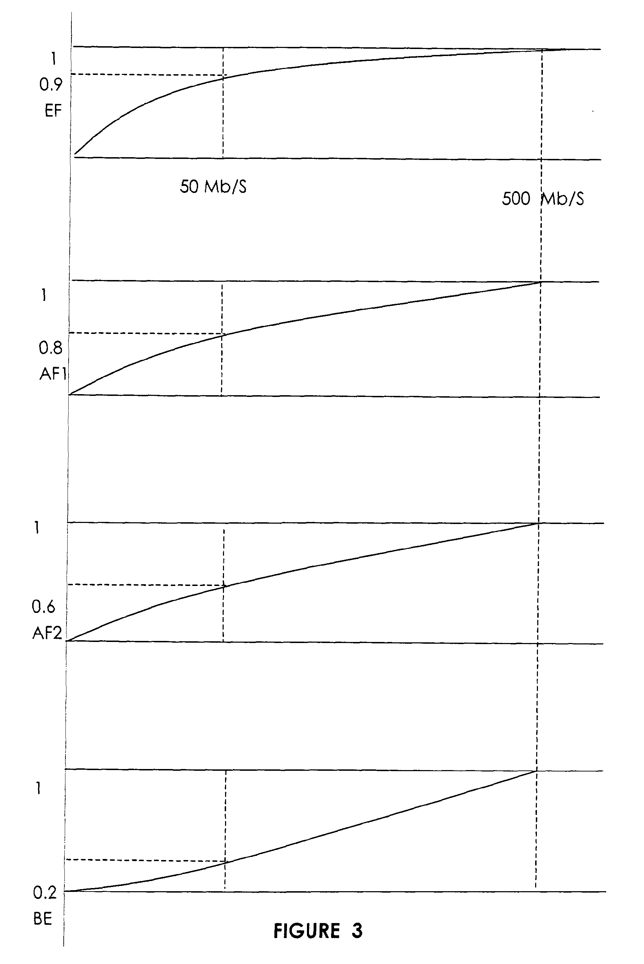

Figure 3 illustrates the probability with which different classes of traffic would be allocated to a 500mb/s link. The curves illustrate the traffic loss, and the probability of allocating traffic to the link is the proportion between the probability = 1 line and the traffic loss curve.

For example there is a 10% probability of allocating additional EF traffic to the link when the link load is 50mb/s,
- a 20% probability of allocating AF1 traffic,
- a 40% probability of allocating AF2 traffic, and
- an 80% probability of allocating BE traffic.

## Claims

1. A method of allocating traffic to a path or paths between a sending node and a receiving node in a network, wherein each message includes a QoS flag,
the method including:
- at the sending node, compiling a traffic status map of the available capacity on the or each practical path between the sending node and the receiving node;
- allocating messages to paths on the basis of its QoS flag, and the available capacity of the paths.

2. A method as claimed in claim 1 in which the QoS hierarchy allocates the highest priority messages to the shorter paths with available capacity in preference to lower priority messages, the lower priority messages being allocated to longer paths as traffic conditions require.

3. A method of allocating traffic in a network substantially as herein described with reference to the accompanying drawings.
